# EUROPEAN PATENT APPLICATION

(11) **EP 4 592 010 A1**
(43) Date of publication of application: **30.07.2025**
(21) Application number: 24784602.5
(22) Date of filing: 14.02.2024
(51) Int. Cl.: B23D 29/02, E04G 21/16

(54) **NUT SPLITTING TOOL**

(30) Priority: 04.04.2023 JP 2023060507; 01.02.2024 JP 2024013908
(71) Applicant: Maxell Izumi Co., Ltd., Nagano 399-8721 (JP)
(72) Inventor: TAKESHIMA, Masafumi, Matsumoto-shi, Nagano 399-8721 (JP)
(74) Representative: Mewburn Ellis LLP
(86) International application number: PCT/JP2024/004924
(87) International publication number: WO 2024/209799

(57) **Abstract**

A nut splitting tool (1) comprises: a body (2) that has a hydraulic pump (9); a cylinder part (4) that is connected to the hydraulic pump (9); and a tool head (3) that is joined to the cylinder part (4). The tool head (3) has: a jaw part (6a) and a jaw part (6b) which are rotatably joined to each other; a wedge part (7a) which is rotatably attached to the jaw part (6a) in a state of being axially supported by a first shaft member (11) inserted therethrough; a wedge part (7b) which is rotatably attached to the jaw part (6b) in a state of being axially supported by a first shaft member (11) inserted therethrough; and a spring (6c) which biases the tip end side of the jaw part (6a) and the tip end side of the jaw part (6b) in a direction away from each other. The hydraulic pump (9) operates to supply operating oil to the cylinder part (4) such that a guide roller (5e) is pushed by a piston (5b) and slides against the rear end side of the jaw part (6a) and the rear end side of the jaw part (6b), and thereby the wedge part (7a) and the wedge part (7b) approach each other so that the tool head (3) cuts a nut (51).

## Description

### Technical Field

The present invention relates to a nut splitting tool.

### Background Art

In a grounded and fixed structure such as a bridge and a guardrail, a nut removal work for removing a nut fastened to the structure is known. As an example, in a bridge joint part, hundreds of nuts are arranged, and in a regular maintenance work, old nuts are removed and replaced with new nuts.

In the nut removal work using a high-speed sander machine or a gas cutting torch in the related art, one minute to three minutes are required for removing one nut. In recent years, an electric tool capable of significantly shortening a time required for removing one nut has been proposed (PTL 1: Japanese Patent No. 7104102).

### Citation List

### Patent Literature

PTL 1: Japanese Patent No. 7104102

### Summary of Invention

### Technical Problem

However, according to the tool in the related art, when a periphery of a fastened nut is a narrow space, it is difficult to approach the nut. Therefore, an object of the present invention is to provide a nut splitting tool that can easily break a fastened nut.

### Solution to Problem

The present invention has been accomplished under the solutions as disclosed below.

According to the present invention, there is provided a nut splitting tool including a main body including a hydraulic pump, a cylinder part connected to the hydraulic pump, and a tool head operated by being coupled to the cylinder part. The cylinder part includes a piston and a pair of guide rollers attached to the piston. The tool head includes a pair of jaw parts coupled to each other to be pivotable, and a pair of wedge parts respectively attached to tip sides of the jaw parts to be pivotable in a state where the wedge parts are pivotally supported by a first shaft member. The hydraulic pump is operated to supply a hydraulic oil to the cylinder part so that the piston advances, and the guide rollers slide on a rear end side of the jaw parts so that the wedge parts are brought close to each other to break a nut.

According to this configuration, the tool head is caused to approach a fastened nut, both sides of the nut are clamped by the wedge parts, and cutting edges of the wedge parts are brought close to each other to sink into the nut. In this manner, the nut can be broken. Therefore, when a periphery of the nut is a narrow space, the tool head can easily approach the nut, and the nut can be easily broken.

As an example, the tool head includes a spring that biases the tip sides of the jaw parts in a direction in which the tip sides of the jaw parts are opened. The hydraulic pump stops an operation so that the piston retreats and the spring contracts to open the tip sides of the jaw parts. According to this configuration, after the nut is broken, the tip sides of the jaw parts are opened by a biasing force of the spring. In this manner, the tool head can be easily shifted to a work for breaking another nut.

As an example, the tool head is attached to the cylinder part in a state where the tool head is pivotally supported by a second shaft member. According to this configuration, the tool head can be easily replaced. For example, a plurality of dedicated tool heads specialized for nuts having specific sizes or nuts having specific types are prepared. In this manner, the second shaft member can be detached from the cylinder part, and it is possible to easily replace with a desired tool head and to perform work at a site.

As an example, a pair of coupling bars are attached to the jaw parts in a state where each of the jaw parts is pivotally supported by a third shaft member. The jaw parts are coupled to each other to be pivotable by the third shaft member and the coupling bars. According to this configuration, hinge strength of the jaw parts can be improved, and a small-sized and high-power tool can be easily achieved.

As an example, a pair of guard plates are attached to the jaw parts, and when the tip sides of the jaw parts move away from each other, the tool head is brought into a state where the nut can be surrounded by the guard plates and the tip sides of the jaw parts. According to this configuration, the nut is broken in a state where the nut is surrounded. Therefore, it is possible to prevent fragments of the broken nut from scattering.

As an example, the cylinder part is coupled to the main body. The cylinder part and the hydraulic pump are connected inside the main body. According to this configuration, a compact and portable configuration can be achieved. As an example, the main body includes a hydraulic pump that feeds a hydraulic oil to the cylinder part, and an electric motor that drives the hydraulic pump. The main body includes a battery pack that supplies power to the electric motor, and an attachment portion to which the battery pack is attached. According to this configuration, the nut splitting tool is easily portable in a work site, and a work range can be easily widened. As an example, the nut splitting tool can include a main body having a pistol shape, a gun shape, or a straight shape.

As an example, the cylinder part is coupled to a hydraulic hose. The cylinder part and the hydraulic pump are connected via the hydraulic hose. According to this configuration, a degree of freedom in combining the cylinder part and the main body to each other becomes excellent. As an example, as the main body, a known hydraulic pump device can be used. As an example, a commercially available product can be applied as the hydraulic hose.

### Advantageous Effects of Invention

According to the present invention, the tool head is caused to approach the nut from an up direction of the nut, both sides of the nut are clamped by the wedge parts, and the cutting edges of the wedge parts are brought close to each other to sink into the nut. In this manner, the nut can be broken. Accordingly, it is possible to realize the nut splitting tool that easily breaks the fastened nut, even at a location having a narrow space next to the nut where a currently used tool is less likely to approach.

### Brief Description of Drawings

Fig. 1 is a schematic front view illustrating a first example of a nut splitting tool according to the present embodiment.
Fig. 2 is an enlarged schematic structural view illustrating a tool head of the nut splitting tool in the first example.
Fig. 3 is a schematic structural view when the tool head in the first example is viewed from a side surface.
Fig. 4 is a schematic structural view when wedge parts of the tool head in the first example are viewed from a lower surface, and is a view illustrating a state where the wedge part is caused to approach from an up direction of a nut.
Fig. 5 is a schematic structural view when the wedge part of the tool head in the first example is viewed from a lower surface, and is a view illustrating a state where cutting edges of the wedge parts are brought close to each other to sink into the nut.
Fig. 6 is a schematic front view illustrating a second example of a nut splitting tool according to the present embodiment.
Fig. 7 is an enlarged schematic structural view illustrating a tool head of the nut splitting tool in the second example.
Fig. 8 is a schematic structural view when the tool head in the second example is viewed from a side surface.
Fig. 9 is a schematic configuration view illustrating a third example of a nut splitting tool according to the present embodiment.
Fig. 10 is an enlarged schematic structural view illustrating a tool head in a third example.

### Description of Embodiments

Hereinafter, an embodiment of the present invention will be described in detail with reference to the drawings. A nut splitting tool 1 of the present embodiment includes a main body 2 including a hydraulic pump 9, a cylinder part 4, and a tool head 3. The nut splitting tool 1 of the present embodiment is the nut splitting tool 1 that breaks a nut fastened to a structure such as a bridge and a guardrail. As an example, a size of a nut 51 used in the bridge is M22 or M20 or larger. The nuts 51 are tightened by a high tension bolt, and a tensile strength after tightening is 1,000 N/mm² or higher. As an example, a bridge joint part is provided with several hundreds of nuts, and a minimum value of a nut interval is 34 mm.

First, a nut splitting tool 1A in a first example will be described.

### [First Example]

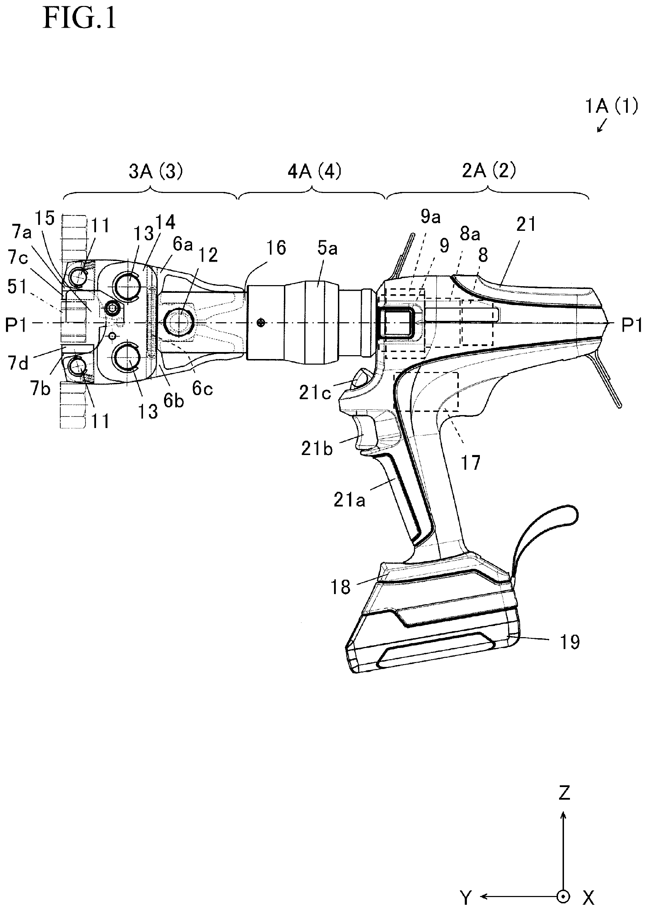

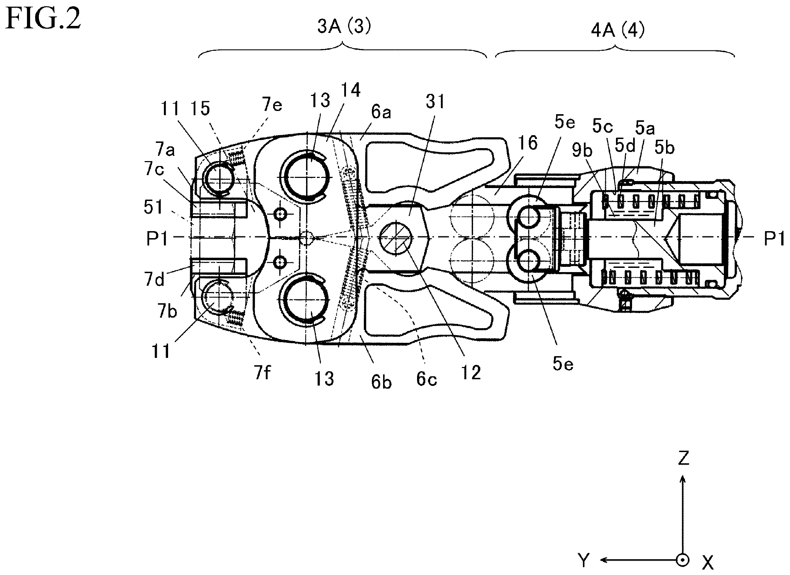

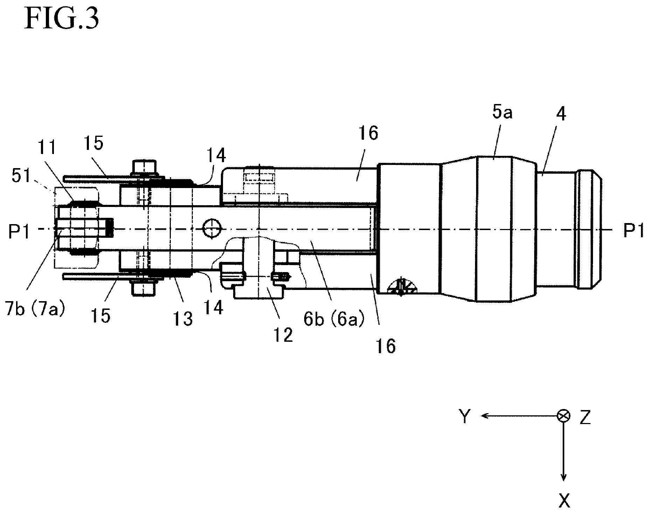

Fig. 1 is a schematic front view illustrating the nut splitting tool 1A in the first example. Fig. 2 is a schematic structural view when a tool head 3A is viewed from a front surface. Fig. 3 is a schematic structural view when the tool head 3A is viewed from a side surface. Here, in order to facilitate description of a positional relationship between respective portions of the nut splitting tool 1A, directions are indicated by arrows of X, Y, and Z in the drawing. The nut splitting tool 1A is normally operated in any direction. In all drawings for describing the embodiment, the same reference numerals will be assigned to members having the same function, and repeated description thereof may be omitted in some cases.

The nut splitting tool 1A includes a main body 2A gripped by a worker, a cylinder part 4A coupled to the main body 2A, and the tool head 3A that carries out a nut splitting work with a hydraulic pressure of the cylinder part 4A. In the first example, the cylinder part 4A is attached and coupled to the main body 2A. The cylinder part 4A and the hydraulic pump 9 are connected inside the main body 2A.

In the cylinder part 4A, a guide roller 5e is coupled to a piston 5b. The hydraulic pump 9 feeds a hydraulic oil 9b to the cylinder part 4A. The main body 2A includes the hydraulic pump 9, an electric motor 8 that drives the hydraulic pump 9, a controller 17 that controls driving of the electric motor 8, and a battery pack 19 that supplies power to the electric motor 8 and the controller 17.

The battery pack 19 is detachably connected to an attachment portion 18 provided in the main body 2A. In this manner, an excellently portable configuration is adopted. In addition to the above-described configuration, in some cases, a configuration in which the battery pack 19 is incorporated in the main body 2A or a configuration in which the battery pack 19 is connected via an adapter attached to the attachment portion 18 may be adopted. The battery pack 19 includes a battery and a sensor that detects a state of the battery. As the battery, a lithium-ion battery, a nickel-metal hydride battery, or other known batteries can be applied.

The cylinder part 4A, the hydraulic pump 9, a speed reducer 8a, and the electric motor 8 are disposed in order along a first axis P1 passing through the main body 2A. A housing 21 is provided with a handle portion 21a to be gripped by a worker in a direction away from the first axis P1. In the housing 21, a start switch 21b for starting the electric motor 8 is disposed in the handle portion 21a, and a return switch 21c is disposed in an up direction of the start switch 21b. The worker operates the start switch 21b or the return switch 21c with fingertips of a hand gripping the handle portion 21a. In the main body 2, the handle portion 21a, the attachment portion 18, and the battery pack 19 are disposed in order. As an example, the nut splitting tool 1A includes the main body 2A having a pistol shape, a gun shape, or a straight shape.

The tool head 3A approaches from an up direction of the nut 51 and clamps both sides of the nut 51 with wedge parts 7. Main components of the tool head 3A are disposed at positions symmetrical with respect to the first axis P1 passing through the piston 5b. The tool head 3A includes a jaw part 6a and a jaw part 6b which are coupled to each other to be pivotable, a first shaft member 11, a wedge part 7a attached to a tip side of the jaw part 6a and a wedge part 7b attached to a tip side of the jaw part 6b, to be pivotable in a state of being inserted into and pivotally supported by the first shaft member 11.

In the cylinder part 4, the piston 5b is disposed in a cylinder chamber 5c, and a coil spring 5d is disposed along an outer periphery of the piston 5b in accordance with an axis of the piston 5b. A cylindrical cover 5a is attached to a tip side of the cylinder part 4.

The tool head 3A includes a spring 6c that biases each tip side of a pair of jaw parts 6a and 6b in an opening direction. The spring 6c is a tension coil spring. A rear end side of the jaw part 6a and a rear end side of the jaw part 6b are extended in a direction away from the first axis P1, the piston 5b advances, and a pair of guide rollers 5e slide on the rear end side of the jaw part 6a and the rear end side of the jaw part 6b. In this manner, a cutting edge 7c and a cutting edge 7d of the wedge parts 7 are brought close to each other.

As an example, the wedge part 7a and the wedge part 7b are each formed to have recesses, and auxiliary springs 7e and 7f which bias the cutting edge 7c and the cutting edge 7d in a direction in which the cutting edges 7c and 7d face each other in parallel are respectively disposed in the recesses. In this manner, both sides of the nut 51 can be easily clamped between the wedge part 7a and the wedge part 7b. Both the auxiliary spring 7e and the auxiliary spring 7f are compression coil springs. The auxiliary spring 7e and the auxiliary spring 7f are optional, and can be omitted.

In the tool head 3A, a pair of coupling bars 14 are attached in a state where each of the jaw part 6a and the jaw part 6b is pivotally supported by a third shaft member 13. The jaw part 6a and the jaw part 6b are coupled to each other to be pivotable by the third shaft member 13 and the coupling bars 14. In the tool head 3A, a guard plate 15 is attached to and fixed to each of the coupling bars 14. When the tip sides of the jaw part 6a and the jaw part 6b move away from each other, the tool head 3A is brought into a state where the nut 51 can be surrounded by each of the guard plates 15, the tip side of the jaw part 6a, and the tip side of the jaw part 6b.

In the first example, a second shaft member 12 pivotally supports the tool head 3A in a state where the tool head 3A is attached to the cylinder part 4A. In the tool head 3A, a column portion 31 is extended in a direction of the first axis P1. In the main body 2, a pair of support portions 16 are extended in the direction of the first axis P1. In a state where the pair of support portions 16 clamp the column portion 31, the second shaft member 12 is inserted into a first through-hole formed in each of the support portions 16 and a second through-hole formed in the column portion 31, and the second nut is tightened and fixed to the second shaft member 12. According to this configuration, a plurality of dedicated tool heads 3A specialized for a specific size range or a specific type in the nut 51 which is a breaking object are prepared. In this manner, the second shaft member 12 can be detached from the main body 2 in a work site or the like, and a work can be easily carried out by replacing the existing tool head with a desired tool head.

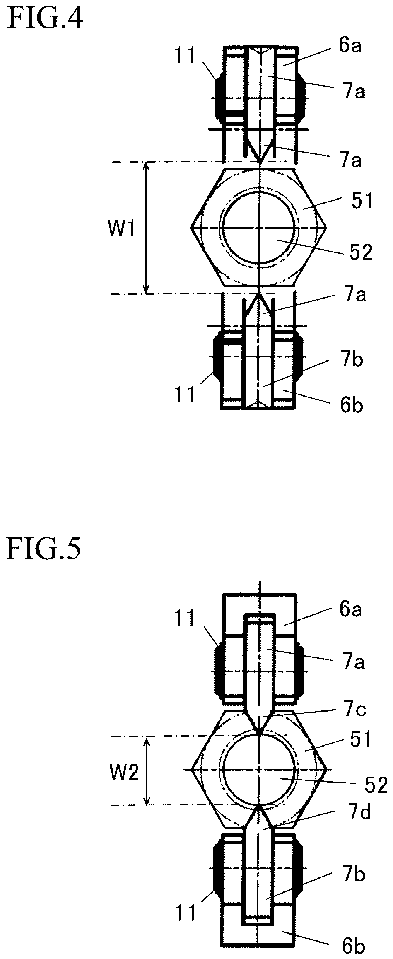

Fig. 4 is a schematic structural view when the wedge part 7a and the wedge part 7b are viewed from a lower surface, and is a view illustrating a state where the wedge part 7a and the wedge part 7b are caused to approach from the up direction of the nut 51 engaged with and fastened to a bolt 52. An interval between the cutting edge 7c of the wedge part 7a and the cutting edge 7d of the wedge part 7b in a state where the tip sides of the jaw part 6a and the jaw part 6b are away from each other will be referred to as a first interval W1. As an example, the first interval W1 is 34 mm or larger and 38 mm or smaller. As an example, the first interval W1 is 35 mm or larger and 37 mm or smaller.

Fig. 5 is a view illustrating a state where the cutting edge 7c of the wedge part 7a and the cutting edge 7d of the wedge part 7b are brought close to each other to sink into the nut 51. An interval between the cutting edge 7c of the wedge part 7a and the cutting edge 7d of the wedge part 7b in a state where the tip sides of the jaw part 6a and the jaw part 6b are brought close to each other will be referred to as a second interval W2. As an example, the second interval W2 is 21 mm or larger and 24 mm or smaller. As an example, the second interval W2 is 19 mm or larger and 21 mm or smaller.

In the nut splitting tool 1A, when the worker presses the start switch 21b, the electric motor 8 rotates, the hydraulic pump 9 is operated via the speed reducer 8a, and the hydraulic pump 9 feeds the hydraulic oil 9b stored in an oil tank 9a to the cylinder chamber 5c. When the hydraulic oil 9b is supplied to the cylinder chamber 5c, a hydraulic pressure of the cylinder chamber 5c becomes higher. The pair of guide rollers 5e attached to the piston 5b slide while pushing the rear end side of the jaw part 6a and the rear end side of the jaw part 6b, and the cutting edge 7c of the wedge part 7a and the cutting edge 7d of the wedge part 7b are brought close to each other. The pair of guide rollers 5e slide while further pushing the rear end side of the jaw part 6a and the rear end side of the jaw part 6b. In this manner, the cutting edge 7c and the cutting edge 7d sink into the nut 51 to break the nut 51.

After the nut 51 is broken, a relief valve is opened at a specified pressure, and a pressure in a high pressure stage is lowered (not illustrated). Next, when the worker pushes the return switch 21c, a check valve is opened, the piston 5b is pushed back by a restoring force of the coil spring 5d, the piston 5b returns to an initial position, and the hydraulic oil 9b is returned to the oil tank 9a.

According to the present embodiment, the tool head 3A is caused to approach the nut 51 from the up direction of the nut 51, both sides of the nut 51 are clamped between the wedge part 7a and the wedge part 7b, the cutting edge 7c and the cutting edge 7d are brought close to each other to sink into the nut 51. In this manner, the nut 51 can be broken. Therefore, the nut 51 fastened to the bolt 52 can be easily broken, even at a location having a narrow space next to the nut where the tool in the related art is less likely to approach.

Next, a nut splitting tool 1B in a second example will be described.

### [Second Example]

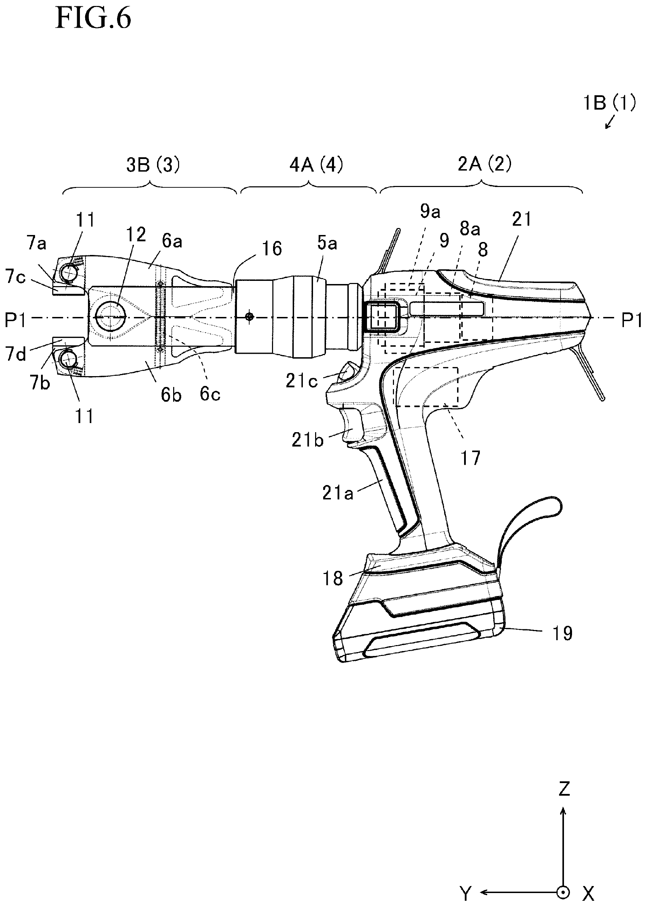

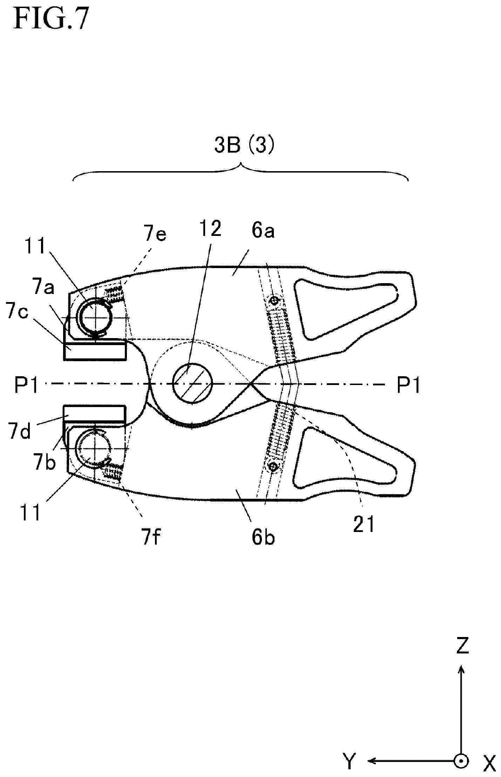

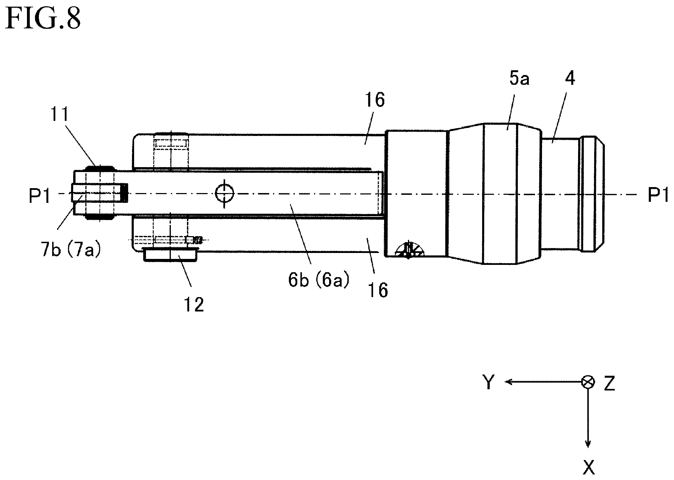

Fig. 6 is a schematic front view illustrating the nut splitting tool 1B in the second example. Fig. 7 is a schematic structural view when a tool head 3B is viewed from a front surface. Fig. 8 is a schematic structural view when the tool head 3B is viewed from a side surface. The main body 2A in the second example has the same configuration as that in the first example. In the second example, points different from those in the first example will be mainly described.

In the second example, the cylinder part 4A is attached and coupled to the main body 2A. The cylinder part 4A and the hydraulic pump 9 are connected inside the main body 2A. In the second example, the second shaft member 12 pivotally supports the tool head 3B in a state where the tool head 3B is attached to the cylinder part 4A. In the second example, the second shaft member 12 couples the jaw part 6a and the jaw part 6b to each other to be pivotable, and pivotally supports the jaw part 6a and the jaw part 6b. In this manner, a simple configuration in which the number of components is reduced can be adopted.

Next, a nut splitting tool 1C in a third example will be described.

### [Third Example]

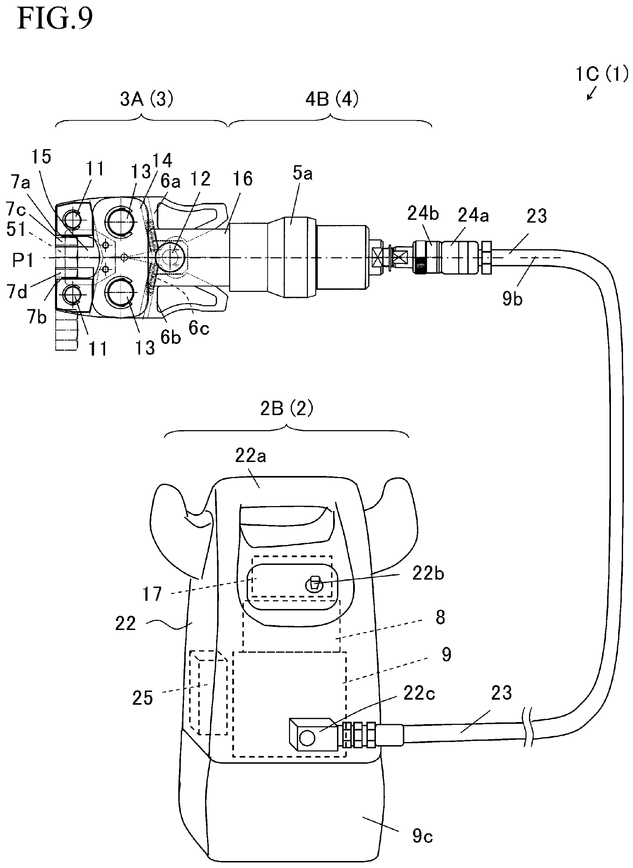

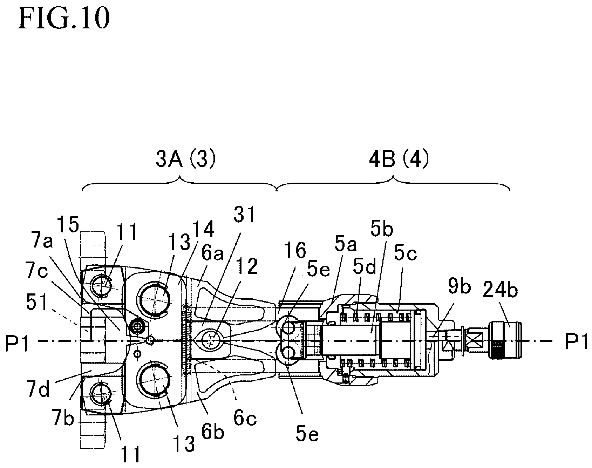

Fig. 9 is a schematic configuration view illustrating the nut splitting tool 1C in the third example. Fig. 10 is a schematic structural view when the tool head 3 is viewed from a front surface. The tool head 3A in the third example has the same configuration as that in the first example. In the third example, points different from those in the first example will be mainly described.

In the third example, a cylinder part 4B and a main body 2B are separate bodies. The cylinder part 4B includes a female coupler 24b communicating with the cylinder chamber 5c. The third example includes a hydraulic hose 23. The hydraulic hose 23 is a rubber hose having high pressure resistance and oil resistance, a male coupler 24a is disposed on one end side, and a joint 22c is disposed on the other end side. In the cylinder part 4B, the female coupler 24b is coupled to the male coupler 24a of the hydraulic hose 23. In the hydraulic hose 23, the joint 22c is coupled to the main body 2B. As a configuration other than the above-described configuration, the cylinder part 4B may include the male coupler 24a, and the hydraulic hose 23 may include the female coupler 24b.

In the third example, the cylinder part 4B and the hydraulic pump 9 are connected via the hydraulic hose 23. As an example, a total length of the hydraulic hose 23 is 1 to 10 m. In the third example, the second shaft member 12 pivotally supports the tool head 3A in a state where the tool head 3A is attached to the cylinder part 4B. According to this configuration, a degree of freedom in combining the cylinder part 4B and the main body 2B to each other becomes excellent.

The main body 2B includes the hydraulic pump 9, the electric motor 8 that drives the hydraulic pump 9, the controller 17 that controls driving of the electric motor 8, and a power supply unit 25 that supplies power to the electric motor 8 and the controller 17. As an example, the power supply unit 25 is connected to an external power supply. As an example, the power supply unit 25 includes a battery pack.

An upper portion of a housing 22 is provided with a handle portion 22a to be gripped by the worker. As an example, a switch 22b for starting the electric motor 8 is disposed on a front side of the housing 22. As an example, the switch 22b is a toggle switch.

In the nut splitting tool 1C, when the worker raises a lever of the switch 22b, the electric motor 8 rotates, the hydraulic pump 9 is operated, and the hydraulic pump 9 feeds the hydraulic oil 9b stored in an oil tank 9c to the cylinder chamber 5c. When the hydraulic oil 9b is supplied to the cylinder chamber 5c, a hydraulic pressure of the cylinder chamber 5c becomes higher. The guide roller 5e attached to the piston 5b slides while pushing the rear end side of the jaw part 6a and the rear end side of the jaw part 6b, and the cutting edge 7c of the wedge part 7a and the cutting edge 7d of the wedge part 7b are brought close to each other. The pair of guide rollers 5e slide while further pushing the rear end side of the jaw part 6a and the rear end side of the jaw part 6b. In this manner, the cutting edge 7c and the cutting edge 7d sink into the nut 51 to break the nut 51.

After the nut 51 is broken, a relief valve is opened at a specified pressure, and a pressure in a high pressure stage is lowered (not illustrated). Next, when the worker lowers the lever of the switch 22b, the check valve is opened, the piston 5b is pushed back by the restoring force of the coil spring 5d, the piston 5b returns to the initial position, and the hydraulic oil 9b is returned to the oil tank 9c. In addition to the above-described configuration, a remote control switch may be provided in the main body 2B, and a series of operations may be performed by using the remote control switch in some cases.

In the above-described embodiment, a configuration in which a battery is incorporated, a configuration in which a power supply cord connected to an external power supply is connected, or a configuration in which these configurations are combined may be adopted. The present invention is not limited to the above-described examples, and various modifications can be made within the scope not departing from the concept of the present invention.

## Claims

1. A nut splitting tool comprising:
a main body including a hydraulic pump;
a cylinder part connected to the hydraulic pump; and
a tool head operated by being coupled to the cylinder part,
wherein the cylinder part includes a piston and a pair of guide rollers attached to the piston,
the tool head includes a pair of jaw parts coupled to each other to be pivotable, and a pair of wedge parts respectively attached to tip sides of the jaw parts to be pivotable in a state where the wedge parts are pivotally supported by a first shaft member, and
the hydraulic pump is operated to supply a hydraulic oil to the cylinder part so that the piston advances, and the guide rollers slide on a rear end side of the jaw parts so that the wedge parts are brought close to each other to break a nut.

2. The nut splitting tool according to claim 1,
wherein the tool head includes a spring that biases the tip sides of the jaw parts in a direction in which the tip sides of the jaw parts are opened,
the tool head is attached to the cylinder part in a state where the tool head is pivotally supported by a second shaft member, and
the hydraulic pump stops an operation so that the piston retreats and the spring contracts to open the tip sides of the jaw parts.

3. The nut splitting tool according to claim 2,
wherein a pair of coupling bars are attached to the jaw parts in a state where each of the jaw parts is pivotally supported by a third shaft member, and
the jaw parts are coupled to each other to be pivotable by the third shaft member and the coupling bars.

4. The nut splitting tool according to claim 2,
wherein a pair of guard plates are attached to the jaw parts, and
when the tip sides of the jaw parts move away from each other, the tool head is brought into a state where the nut is surrounded by the guard plates and the tip sides of the jaw parts.

5. The nut splitting tool according to any one of claims 1 to 4,
wherein the cylinder part is coupled to the main body, and
the cylinder part and the hydraulic pump are connected inside the main body.

6. The nut splitting tool according to any one of claims 1 to 4,
wherein the cylinder part is coupled to a hydraulic hose, and
the cylinder part and the hydraulic pump are connected via the hydraulic hose.
